# EUROPÄISCHE PATENTSCHRIFT

(11) **EP 0 975 878 B1**
(45) Veröffentlichungstag und Bekanntmachung des Hinweises auf die Patenterteilung: **21.05.2003**
(21) Anmeldenummer: 98906954.7
(22) Anmeldetag: 16.02.1998
(51) Int. Cl.: F16B 35/04, F16B 23/00

(54) **SCHRAUBE**
SCREW
VIS

(30) Priorität: 26.03.1997 DE 19712784
(43) Veröffentlichungstag der Anmeldung: 02.02.2000
(73) Patentinhaber: SFS intec Holding AG, 9435 Heerbrugg (CH)
(72) Erfinder: ÖSTERLE, Helmut, A-6800 Feldkirch (AT); KÖPPEL, Norbert, CH-9434 Au (CH); SCHEIWILLER, Felix, CH-9450 Altstätten (CH); KOUWENHOVEN, Peter, CH-9443 Widnau (CH)
(74) Vertreter: Ludescher, Hans
(86) Internationale Anmeldenummer: EP9800872
(87) Internationale Veröffentlichungsnummer: WO98042989

(56) Entgegenhaltungen:
- DE-A- 2 456 668
- FR-E- 83 706
- US-A- 4 189 976
- US-A- 5 551 818
- ILLGNER, BLUME: "Schrauben Vademecum", 1981, BAUER & SCHAURTE KARCHER GMBH,

## Beschreibung

Die Erfindung betrifft eine Schraube mit einem zumindest auf einem Teil seiner Länge mit einem Gewinde versehenen Schaft und einem Kopf, welcher einen Werkzeugangriff aufweist, wobei am Kopf der Schraube wenigstens ein mit axialem Abstand von einer Auflagefläche angeordneter Bund ausgebildet ist und dieser Bund zumindest abschnittweise einen schaftseitig an den Bund anschließenden Abschnitt radial übergreift (siehe auch das Schrauben Vademecum, eine Veröffentlichung von Bauer & Schaurte Karcher GmbH, IIIgner, Blume, 1981).

An Schrauben mit einem Kopf und einem Werkzeugangriff werden die verschiedensten Anforderungen gestellt. Neben einem entsprechend ästhetischen Aussehen gerade bei Anwendung in einem sichtbaren Bereich im Hochbau bzw. im Einrichtungsbau oder bei der Kraftfahrzeugindustrie geht es vor allem auch um eine sichere Halterung und Führung der Schraube beim Eindrehen. Weiter wird in der Regel auch die Forderung aufgestellt, daß entsprechende Sicherheitsvorkehrungen geschaffen sind, die es nicht einfach zulassen, daß die Schraube durch irgendwelche Werkzeuge gelockert oder gänzlich gelöst werden kann.

Die vorliegende Erfindung hat sich daher zur Aufgabe gestellt, eine Schraube der eingangs. genannten Art zu schaffen, welche im Bereich des Kopfes in axialer Richtung gesichert festgehalten werden kann und bei der somit auch bei einer geringen axialen Länge eines Werkzeugangriffes der sichere Eingriff eines Werkzeuges erhalten bleibt.

Erfindungsgemäß wird dazu vorgeschlagen, daß ein als Außenangriff ausgebildeter Werkzeugangriff schaftseitig an dem an den Bund anschließenden Abschnitt des Kopfes vorgesehen ist und das Gewinde selbstformend ausgebildet ist.

Durch diese erfindungsgemäßen Maßnahmen ist also auf jeden Fall eine axial gesicherte Halterung des Kopfes der Schraube in einem entsprechenden Werkzeug möglich, da ein Bund vorhanden ist, der mit Abstand von der Auflagefläche des Schraubenkopfes angeordnet ist. Es werden dadurch Möglichkeiten geschaffen, ein Werkzeug einzusetzen, welches den Schraubenkopf bzw. den erfindungsgemäß vorgesehenen Bund hintergreifen kann, wobei dieser Hintergriff bis zum endgültigen Festziehen der Schraube erhalten bleiben kann. Auch nach dem endgültigen Festziehen der Schraube ist demnach der erfindungsgemäß vorgesehene Bund mit axialem Abstand von der Auflagefläche des Kopfes angeordnet. Da der Kopf in axialer Richtung der Schraube gesehen in einem entsprechenden Werkzeug durch den vorspringenden Bund gesichert werden kann, bedarf es auch keiner besonderen axialen Länge des Werkzeugangriffes, da sich das Werkzeug selbst ebenfalls nicht in axialer Richtung gegenüber der Schraube verschieben kann. Werkzeug und Schraube bilden so bis zum endgültigen Eindrehen, d.h. bis zum endgültigen Setzen der Schraube eine Art Einheit, da die Schraube im Bereich des Bundes am Kopf fest eingespannt werden kann, wobei zugleich mit dem Einspannen des Kopfes auch ein Eingriff des Werkzeuges an einem entsprechenden Werkzeugangriff der Schraube stattfindet.

Trotz des vielleicht als zusätzliche konstruktive Ausgestaltung des Kopfes anzusehenden Bundes kann ein in axialer Richtung gesehen relativ niedriger Kopf der Schraube, welcher mit einem ästhetischen Aussehen gestaltet werden kann, eingesetzt werden. Da bei einer solchen Konstruktion die Möglichkeit für einen Werkzeugangriff mit geringer axialer Länge gegeben ist, bietet sich eine solche Schraube auch als spezielle Sicherheitsschraube an, da kein Lösen mit irgendwelchen Werkzeugen erfolgen kann.

Gerade bei einer Ausgestaltung, bei welcher der Werkzeugangriff an einem dem Schaft zugewandten Abschnitt des Kopfes der Schraube ausgebildet ist und bei der der dem Schaft der Schraube abgewandte Abschnitt des Kopfes als Bund ausgeführt ist und dieser Bund den Abschnitt mit dem Werkzeugangriff radial übergreift, ergeben sich zusätzliche Vorteile in bezug auf die Kopfhöhe und die Sicherheit gegen ein unbefugtes Verdrehen der Schraube. Durch eine solche Maßnahme kann nicht nur der Kopf sehr niedrig gehalten werden, sondern auch der Werkzeugangriff an dem unter dem Bund liegenden Abschnitt weist eine nur sehr geringe axiale Länge auf, so daß bei der fertig gesetzten Schraube keinesfalls ein üblicher Steckschlüssel unterhalb des Bundes eingeschoben werden kann, um einen Eingriff mit dem mit dem Werkzeugangriff versehenen Abschnitt herstellen zu können. Bei einer solchen Ausgestaltung ist die Ästhetik des Schraubenkopfes in besonderer Weise herausstellbar, da erst bei ganz genauem Betrachten festgestellt werden kann, daß unterhalb des von außen immer sichtbaren Bundes noch ein zurückversetzter Abschnitt mit einem Werkzeugangriff vorhanden ist. Auf diese Weise kann der Bund auch den obersten Abschluß des Kopfes der Schraube bilden und somit völlig glatt und ohne Werkzeugangriff ausgestaltet werden.

Bei einer anderen Ausführungsvariante ist vorgesehen, daß an den an den Bund anschließenden, schaftseitigen Abschnitt ein die Auflagefläche des Kopfes bildender scheibenförmiger Teil anschließt. Damit wird ein Kopf gebildet, welcher praktisch zwischen zwei Abschnitten mit größerem Durchmesser bzw. mit größeren radialen Abmessungen einen ringförmigen Einschnitt, der den an den Bund anschließenden Abschnitt bildet, aufweist. Es ist dadurch gegebenenfalls eine größere Auflagefläche des Kopfes an dem Werkstück geschaffen worden, wobei diesfalls jedoch der der Auflagefläche entfernt liegendere Bund dazu dient, von einem entsprechenden Werkzeug erfaßt zu werden. Das Werkzeug kann dann wiederum den Bund hintergreifen, da der im Durchmesser bzw. den Außenabmessungen kleinere Abschnitt unmittelbar an den Bund anschließt.

Eine weitere Ausführung sieht vor, daß ein zusätzlicher Werkzeugangriff an der dem Schaft abgewandten Seite des Bundes ausgebildet ist. Damit ist zwar eine leichtere Zugänglichkeit für ein nachträgliches Lösen einer gesetzten Schraube gegeben, doch kann auch hier ein Werkzeugangriff mit relativ geringer axialer Länge eingesetzt und dadurch wieder eine entsprechend große Sicherheit erzielt werden. Bei Werkzeugangriffen geringer axialer Länge ist es fast unmöglich, eine fest angezogene Schraube mit irgendeinem Steckschlüssel oder einem Gabelschlüssel zu lösen, wenn nicht eine exakte und fixierte Ausrichtung bezüglich der Schraubenachse erfolgen kann.

In diesem Zusammenhang ist es möglich, daß an der dem Schaft abgewandten Seite des Bundes ein axial vorstehender Abschnitt mit einem Außenwerkzeugangriff ausgebildet ist. Es besteht also ebenfalls die Möglichkeit, einen entsprechenden Innenwerkzeugangriff direkt an der Oberseite des Bundes vorzusehen. Da es bei einem Innenwerkzeugangriff grundsätzlich möglich ist, diesen mit nur geringer axialer Tiefe auszubilden, können auch hier zusätzliche Sicherheitsmaßnahmen gegen ein Lösen miteingebaut werden. Dabei ist nicht nur an einen Innensechskant oder spezielle Innenangriffe mit einem regelmäßigen Konturenverlauf gedacht, sondern es können zur Ermöglichung einer exakten Anpassung an Werkzeuge des betreffenden Herstellers durchaus auch mit einem ganz speziellen Verlauf ausgestattete Rillen oder Rippen vorgesehen werden.

Im Rahmen der Erfindung ist es auch denkbar, daß anstelle eines einstückig an den Bund anschließenden Abschnittes auf der Seite des Schaftes der Schraube eine andere Ausführungsvariante vorgesehen wird. Dazu wird vorgeschlagen, daß zur Bildung eines axialen Abstandes des Bundes zur Auflagefläche auf einem Werkstück eine im Durchmesser gegenüber dem Bund kleinere Unterlegscheibe vorgesehen ist, welche verlierbar oder unverlierbar unter dem Bund einsetzbar ist. Es muß also nicht immer ein einstückig an den Bund anschließender Abschnitt vorhanden sein, sondern dieser axiale Abstand kann eben auch durch eine Unterlegscheibe erzielt werden. Damit die sichere Halterung des Schraubenkopfes beim Eindrehvorgang bis zum endgültigen Setzen der Schraube erhalten bleiben kann, muß ja lediglich unterhalb des Bundes ein entsprechend axialer Abstand geschaffen werden. Es darf nicht dazu kommen, daß das Werkzeug, welches eben die Schraube im Bereich des Bundes entsprechend hält, beim Festziehen der Schraube unterhalb des Bundes mit der Werkstückoberfläche in Kontakt kommt.

In diesem Zusammenhang ist es auch möglich, einen zusätzlichen scheibenförmigen Teil, welcher an einen entsprechenden Abschnitt unterhalb des Bundes anschließt, einstückig mit dem Kopf der Schraube auszuführen oder aber als Unterlegscheibe auszubilden.

In der Regel wird es ausreichen, daß wenigstens einer der Abschnitte des Kopfes der Schraube oder eben der Bund am Kopf der Schraube einen Werkzeugangriff aufweist. Denkbar ist es aber auch, daß mehrere in Achsrichtung der Schraube gegebenenfalls mit Abstand aufeinander folgende Abschnitte des Kopfes einen Werkzeugangriff aufweisen. Dabei ist es möglich, daß diese mehreren Abschnitte auch die unterschiedlichsten Ausbildungen von Werkzeugangriffen aufweisen.

Gerade zur Bildung einer ebenen Abschlußfläche am Kopf der Schraube und somit zur optischen Darstellung einer entsprechenden Losdrehsicherheit ist es vorteilhaft, daß der Bund in Achsrichtung der Schraube gesehen den schaftseitigen Abschnitt mit dem Werkzeugangriff zur Gänze abdeckt, so daß der Werkzeugangriff zur Gänze unterhalb und innerhalb der Außenbegrenzung des Kopfes liegt.

Weiter wird vorgeschlagen, daß der Bund und einer oder mehrere zusätzliche, scheibenförmige Teile gleiche oder unterschiedliche Größe und/oder Außenkontur aufweisen. Dadurch sind nicht nur verschiedene Einsatzvarianten einer solchen Schraube denkbar, sondern es ergeben sich daraus auch die verschiedensten Kombinationen von Werkzeugangriffen, welche mit einem üblichen Werkzeug nicht erfaßt werden können. Es sind also durch die erfindungsgemäßen Maßnahmen die verschiedensten Ausbildungsvarianten von Schraubenköpfen denkbar, bei welchen jedoch stets die Gewähr gegeben sein muß, daß die Schraube während des ganzen Eindrehvorganges axial gesichert und somit auch axial ausgerichtet gehalten wird, und daß der Werkzeugangriff während des Eindrehvorganges ständig in exakt ausgerichteter Lage im Einsatz bleibt.

Eine sehr einfache Variante liegt darin, daß am Bund selbst ein Außenwerkzeugangriff ausgebildet ist. Bei einem Außenangriff am Bund selbst sind jedoch die Sicherheitsmerkmale wesentlich tiefer anzusetzen als bei einer Anordnung eines Werkzeugangriffes an dem unterhalb des Bundes vorgesehenen Abschnitt.

Für den Werkzeugangriff gibt es eine Reihe von Möglichkeiten, wobei die einfachste Variante darin liegt, daß der Werkzeugangriff im Querschnitt mehreckig oder unrund ausgeführt ist. Dabei wäre es auch denkbar, daß z.B. bei einem selbstformenden Gewinde auf dem Schaft und einem entsprechenden trilobularen Querschnitt des Schaftes auch der Werkzeugangriff an dem entsprechenden Abschnitt trilobular ausgebildet ist. Es ist im Rahmen der Erfindung ebenfalls denkbar, daß ein Werkzeugangriff in Form von Vertiefungen und/oder Erhöhungen und/oder symmetrisch bzw. unsymmetrisch verlaufender Umfangskontur vorgesehen wird.

Durch die erfindungsgemäßen Maßnahmen ist die Kopfform einer Schraube sehr individuell zu gestalten, wobei trotzdem eine entsprechende Halterung beim Eindrehen derselben gewährleistet ist. So ist es möglich, daß der Bund zylinder-, kegelstumpf- oder kugelabschnittförmig ausgebildet ist. Dabei ist es vorteilhaft, wenn insbesondere am frei liegenden Endbereich des Kopfes vorgesehene Übergänge oder Kanten abgerundet ausgeführt sind. Die Funktionen der technischen Konstruktion und der ästhetischen Oberfläche können also optimal koordiniert werden.

Um in ganz spezieller Weise eine Sicherheit gegen ein Lösen der Schraube zu bewirken, wird vorgeschlagen, daß der den Werkzeugangriff aufweisende Abschnitt bezüglich seiner axialen Länge gleich groß oder kleiner ist als der einen Teil des Kopfes bildende Bund. Für den mit dem Werkzeugangriff ausgestatteten Abschnitt ist also nur eine geringe axiale Länge notwendig, so daß der nach dem fertigen Setzen der Schraube verbleibende Einstich unterhalb des Bundes kaum wahrnehmbar ist und schon gar nicht mit einem handelsüblichen Werkzeug erreicht werden kann.

Im Rahmen der Erfindung ist es aber auch möglich, daß der den Werkzeugangriff aufweisende Abschnitt bezüglich seiner axialen Länge größer ist als der einen Teil des Kopfes bildende Bund. Eine solche Variante ist je nach Bedarf einsetzbar, zumal z.B. auch aus ästhetischen Gründen bei diversen Einsatzfällen ein besonders hoher Kopf erwünscht ist.

Bei einer besonderen Ausgestaltung der Schraube wird vorgesehen, daß an dem dem Kopf abgewandten Ende des Schaftes ein Bohrteil ausgebildet, angesetzt oder eingesetzt ist. Gerade durch die spezielle Ausgestaltung des Kopfes und die Möglichkeit der Halterung und der exakten Ausrichtung in axialer Richtung sind die Merkmale auch bei selbstbohrenden Schrauben einsetzbar. Obwohl nur eine geringe axiale Länge für den Werkzeugangriff vorhanden ist, kann das für einen Bohr- oder Gewindeformvorgang notwendige Drehmoment ohne irgendwelche Probleme übertragen werden.

Weitere erfindungsgemäße Merkmale und besondere Vorteile werden in der nachstehenden Beschreibung anhand der Zeichnungen noch näher erläutert. Es zeigen;
- Fig. 1: eine Ansicht einer Schraube und
- Fig. 2: eine Ansicht der Schraube in Richtung II-II in Fig. 1;
- Fig. 3 bis Fig. 5: verschiedene Ausführungsvarianten von Köpfen bei einer Schraube;
- Fig. 6: eine weitere Ausführungsvariante der Schraube mit einem besonderen Kopf und
- Fig. 7: einen Schnitt nach der Linie VII-VII in Fig. 6;
- Fig. 8: eine Ansicht einer weiteren Ausführungsform einer Schraube und
- Fig. 9: die Ansicht IX-IX gemäß Fig. 8.

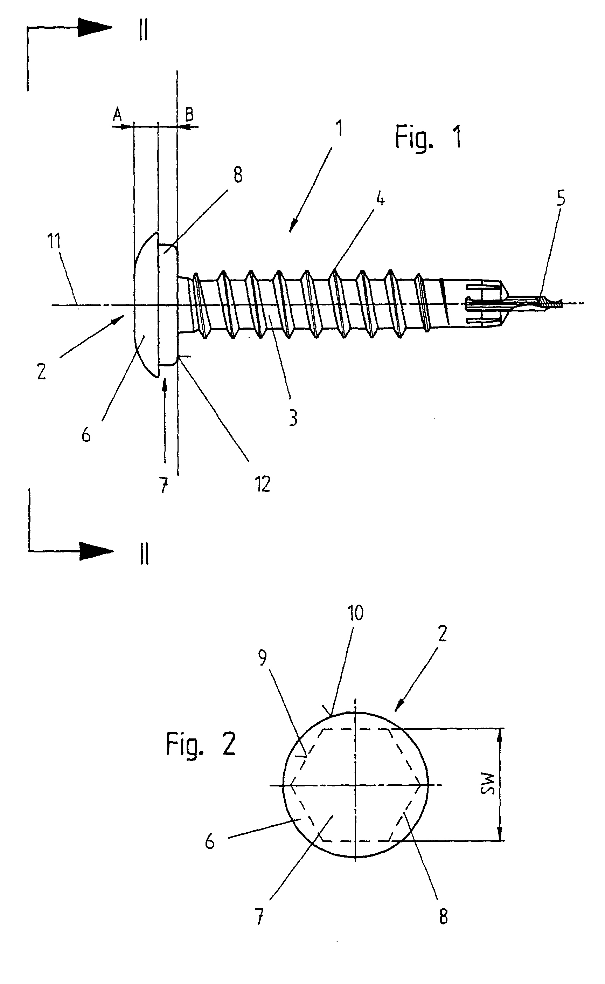

Eine Schraube 1, wie sie in den Fig. 1 und 2 und in den weiteren Zeichnungsfiguren dargestellt ist, besteht im wesentlichen aus einem Kopf 2 und einem Schaft 3. Der Schaft 3 ist zumindest auf einem Teil seiner Länge mit einem Gewinde 4 versehen. Bei solchen Schrauben kann zusätzlich ein Bohrteil 5 eingesetzt werden, welcher beim dargestellten Beispiel als Bohrplättchen ausgeführt und in einen entsprechenden Schlitz am freien Ende des Schaftes eingesetzt ist. Selbstverständlich kann jede Art von Bohrteil vorgesehen werden, welcher am freien Ende des Schaftes ausgebildet, angesetzt oder eingesetzt wird. Das Gewinde 4 ist bei Anordnung eines Bohrteiles 5 natürlich selbstgewindeformend ausgeführt. Die erfindungsgemäßen Maßnahmen sind aber auch auf jede Art von Schrauben anwendbar, welche einen Schaft 3 mit einem Gewinde 4 aufweisen, und zwar unabhängig davon, ob ein Bohrteil 5 vorhanden ist.

Der Kopf der Schraube ist mit einem Werkzeugangriff 8 ausgestattet. Am Kopf 2 der Schraube 1 ist ein mit axialem Abstand B von der Auflagefläche 12 angeordneter Bund 6 ausgebildet. Der Bund übergreift zumindest abschnittweise den schaftseitig an den Bund 6 anschließenden Abschnitt 7. Bei dieser Ausführung ist der Werkzeugangriff 8 am Abschnitt 7 angeordnet. Der dem Schaft 3 der Schraube 1 abgewandte Abschnitt des Kopfes 2 wird von dem Bund 6 gebildet, wobei dieser Bund 6 den Abschnitt 7 mit dem Werkzeugangriff 8 radial übergreift. Gerade bei einer solchen Ausführung ist vorgesehen, daß der Bund 6 in Achsrichtung der Schraube gesehen den schaftseitigen Abschnitt 7 mit dem Werkzeugangriff 8 zur Gänze abdeckt. Der Werkzeugangriff 8 liegt somit mit seiner Begrenzung 9 zur Gänze innerhalb der Begrenzung 10 des Bundes 6 und wird unterhalb desselben völlig abgedeckt. Bei der Ausführung nach den Fig. 1 und 2 ist der Werkzeugangriff 8 mehreckig ausgeführt, wobei ein Sechskant vorgesehen ist. Der Sechskant weist eine entsprechende Schlüsselweite SW auf. Im Rahmen der Erfindung wäre es durchaus denkbar, als Werkzeugangriff einen entsprechenden Vierkant, Fünfkant oder Achtkant vorzusehen. In den nachstehenden Erläuterungen wird noch auf Ausführungsbeispiele eingegangen, bei welchen der Werkzeugangriff unrund ausgeführt ist. Weiter wäre es im Rahmen der Erfindung denkbar, einen Werkzeugangriff in Form von Vertiefungen und/oder Erhöhungen, z.B. radial ausgerichteten Zapfen oder Bohrungen, und/oder symmetrisch bzw. unsymmetrisch verlaufender Umfangskontur vorzusehen.

Aus Fig. 1 ist ersichtlich, daß bei der konstruktiven Gestaltung des Bundes 6 eine Vielzahl von Möglichkeiten offen steht. So ist es denkbar, den Bund zylinderförmig oder aber, wie in Fig. 1 dargestellt, kegelstumpfförmig auszubilden. Möglich wäre es ebenfalls, den Bund kugelabschnittförmig auszuführen, da es lediglich eines über den Abschnitt 7 vorstehenden Bundes bedarf, um den Kopf der Schraube sicher in ein Werkzeug einspannen zu können. Auch in ästhetischer Hinsicht ist der Kopf 2 verschiedenartig gestaltbar. So ist es vorteilhaft, wenn insbesondere am frei liegenden Endbereich des Kopfes 2 vorgesehene Übergänge oder Kanten abgerundet ausgeführt sind. Auch ein im Querschnitt gesehen halbkreisförmiger, umlaufender Abschluß am Außenrand des Bundes 6 ist möglich.

Der den Werkzeugangriff 8 aufweisende Abschnitt 7 ist bezüglich seiner Länge B in Richtung der Längsachse 11 der Schraube 1 gesehen gleich groß oder kleiner als die axiale Länge A des einen Teil des Kopfes 2 bildenden Bundes 6. Die axiale Länge B des mit dem Werkzeugangriff 8 versehenen Abschnittes 7 kann also relativ klein gehalten werden, so daß demnach auch die gesamte Höhe des Kopfes 2, die sich aus den Maßen A + B ergibt, relativ klein gehalten werden kann. Im Rahmen der Erfindung ist es aber auch denkbar, den den Werkzeugangriff 8 aufweisenden Abschnitt 7 bezüglich seiner axialen Länge B gleich groß oder größer als die axiale Länge A des Bundes 6 auszubilden. Auch bei einer solchen Maßnahme ist die Möglichkeit gegeben, den Kopf der Schraube axial gesichert zu halten und eine Angriffsmöglichkeit für einen Werkzeugangriff zu schaffen.

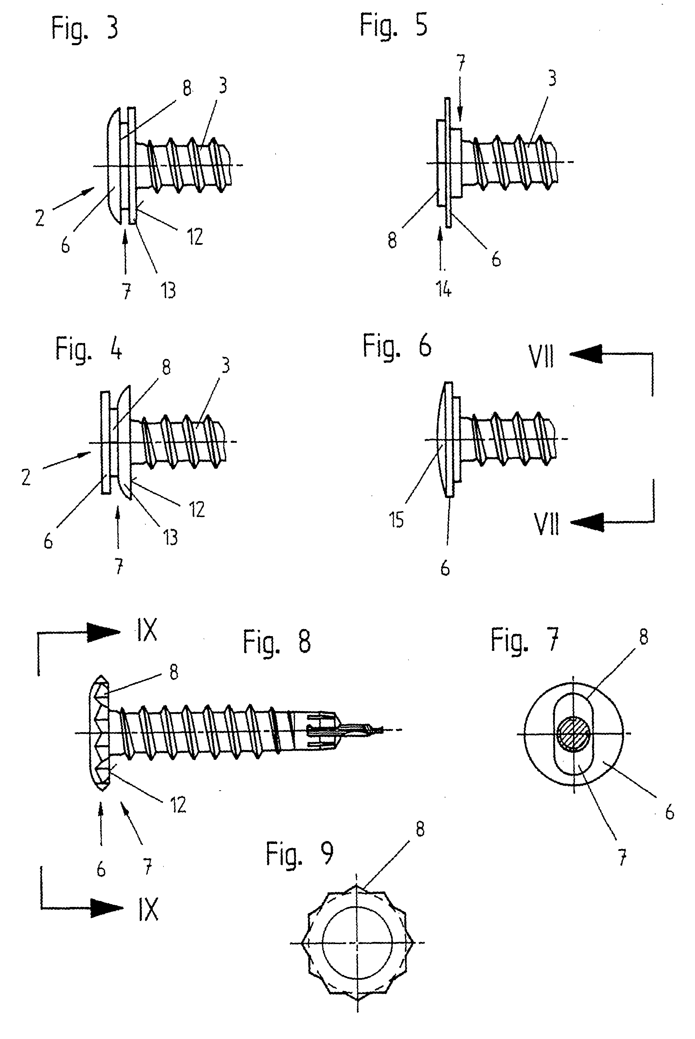

Bei den Ausführungen nach Fig. 3 und 4 schließt an den an den Bund 6 folgenden Abschnitt 7 ein die Auflagefläche 12 des Schraubenkopfes 2 bildender scheibenförmiger Teil 13 an. Der Abschnitt 7 kann in gleicher Weise mit einem entsprechenden Werkzeugangriff 8 versehen sein und der Bund 6 in gleicher Weise ausgebildet werden wie bei der Ausführung in Fig. 1 oder aber entsprechend zylinderförmig wie bei der Ausgestaltung nach Fig. 4. Bei der Ausführung nach Fig. 3 ist der zusätzliche scheibenförmige Teil im wesentlichen zylindrisch ausgeführt, wogegen derselbe bei der Ausführung nach Fig. 4 eine ähnliche Ausgestaltung wie der Bund 6 gemäß den Fig. 1 und 3 aufweist. Bei einer Ausführung nach Fig. 4 ist es auch denkbar, daß der scheibenförmige Teil 13 beispielsweise einen größeren Durchmesser aufweist als der Bund 6. Der scheibenförmige Teil 13 kann einstückig mit dem Kopf, d.h. mit der gesamten Schraube, ausgeführt werden oder aber in Form einer Unterlegscheibe, welche verlierbar oder unverlierbar unterhalb des Schraubenkopfes eingesetzt wird, ausgebildet sein.

Der Bund 6 und der zusätzliche scheibenförmige Teil 13 können gleiche oder unterschiedliche Größe und/oder Außenkontur aufweisen, so daß hier noch zusätzliche ästhetische Gestaltungsmöglichkeiten offen stehen. Auch ist es denkbar, anstelle des nur einen zusätzlichen scheibenförmigen Teiles 13 gemäß den Fig. 3 und 4 noch weitere solche scheibenförmige Teile in axialer Richtung aufeinander folgend, gegebenenfalls unter Zwischenschaltung von Abschnitten kleineren Durchmessers, anzuordnen, so daß gegebenenfalls zwei oder mehrere Bunde 6 mit axialem Abstand aufeinander folgend vorgesehen wären. Ein entsprechendes Werkzeug könnte dann zwei oder mehrere Bunde 6 hintergreifen,

Bei der Ausgestaltung nach Fig. 5 ist der Werkzeugangriff 8 an einem dem Schaft 3 abgewandten Abschnitt 14 des Bundes 6 ausgebildet. Bei einer solchen Ausgestaltung ist zwar der Werkzeugangriff 8 für ein unbefugtes Lösen der Schraube leichter zugänglich, doch kann auch in diesem Fall die axiale Länge des Werkzeugangriffes 8 bei Bedarf klein bemessen werden, um handelsüblichen Werkzeugen kaum eine richtige Angriffsposition zu bieten. In dem hier axial vorstehenden Abschnitt 14 ist ein Werkzeugangriff 8 mit einem Außenangriff vorgesehen. Bei einem Werkzeugangriff mit einem Außenangriff können die verschiedensten Formen und Konturgestaltungen gewählt werden, so auch unrunde Konstruktionsvarianten oder beispielsweise Rillen oder regelmäßig oder unregelmäßig verlaufende Stege usw.

Auch bei einer solchen Ausführung ist es durchaus denkbar, daß sowohl der Abschnitt 14 als auch der unter dem Bund 6 liegende Abschnitt 7 einen Werkzeugangriff aufweist. Es können also im Rahmen der Erfindung mehrere in Achsrichtung der Schraube 1 gegebenenfalls mit Abstand aufeinander folgende Abschnitte 7 und 14 und natürlich auch zusätzlich der den Bund 6 bildende Abschnitt einen Werkzeugangriff aufweisen.

Aus der Ausgestaltung nach den Fig. 6 und 7 ist ersichtlich, daß der Werkzeugangriff 8 an dem Abschnitt 7, welcher unterhalb des Bundes 6 liegt, unrund ausgeführt ist. Unter unrund werden natürlich die verschiedensten Ausgestaltungen verstanden, so beispielsweise eine trilobulare oder überhaupt nach Art eines Gleichdicks verlaufende Kontur. Es ist aber auch möglich, einen ellipsenförmigen Werkzeugangriff 8 vorzusehen oder wie in der Zeichnung dargestellt, eine Art länglicher Steg mit parallelen Begrenzungsflächen, wobei die Enden des Steges kreisförmig abgerundet sind. Gerade der Ausführungsform nach den Fig. 6 und 7 ist noch zu entnehmen, daß der Abschluß des Kopfes 2 der Schraube, d.h. hier praktisch die Oberseite des Bundes 6, einen kugelabschnittförmigen Abschluß 15 bildet.

Wie bereits ausgeführt, könnte auch am Bund selbst ein Werkzeugangriff ausgebildet werden. Bei der Ausgestaltung nach den Fig. 8 und 9 ist der Werkzeugangriff 8 praktisch am Übergang des Bundes 6 auf den darunter liegenden Abschnitt 7 vorgesehen, so daß der Werkzeugangriff 8 nicht nur dem Angriff des Eindrehwerkzeuges dient, sondern zusätzlich die dem Bund 6 obliegende Funktion zum Hintergreifen mit einem Werkzeug bildet. Der Werkzeugangriff 8 erstreckt sich praktisch von der Auflagefläche 12 des Kopfes 2 weg bis zur Umfangskontur des Bundes 6. Bei dieser Ausgestaltung ist zwar ebenfalls wieder eine unmittelbare Angriffsmöglichkeit nach dem Setzen der Schraube gegeben, doch sind die Angriffsflächen auch hier von geringer axialer Ausdehnung, so daß ein entsprechendes Drehmoment kaum ohne zusätzliche Einspannung des Kopfes übertragen werden kann.

Im Rahmen der Erfindung wäre es weiter denkbar, den Bund mit einem entsprechenden Außenangriff zu versehen und zur Bildung eines entsprechenden axialen Abstandes des Bundes von dem Werkstück nach dem endgültigen Setzen der Schraube einfach eine Unterlegscheibe mit einem gegenüber dem Bund kleineren Durchmesser einzusetzen. Diese kleinere Unterlegscheibe kann einfach verlierbar oder unverlierbar auf den Schaft 3 der Schraube 1 aufgesetzt werden. Damit ist die Möglichkeit geschaffen, den Bund 6 entsprechend hintergreifen zu können, wobei zusätzlich mit dem Erfassen des Kopfes 2 auch das entsprechende Drehmoment übertragen werden kann, weil das den Bund erfassende Werkzeug zugleich in den Außenangriff am Bund selbst eingreift. Die Unterlegscheibe könnte aber auch insgesamt einen Durchmesser aufweisen, welcher gleich oder größer ist als der Durchmesser des Bundes 6, wobei diese Unterlegscheibe dann jedoch einen ringförmigen Ansatz kleineren Durchmessers aufweist, auf dem der Kopf der Schraube abgestützt wird. So ergibt sich wieder der zum Hintergreifen des Bundes erforderliche axiale Abstand.

Da beim Eindrehvorgang eine optimale Halterung und Ausrichtung einer Schraube stattfinden kann, sind die konstruktiven Maßnahmen gemäß der vorliegenden Erfindung natürlich auch bei Schrauben einsetzbar, deren Köpfe beispielsweise mit Kunststoff beschichtet sind bzw. zum größten Teil aus einem Kunststoffkörper bestehen. Durch das Einspannen des Kopfes der Schraube wird auch die Gefahr eines Überdrehens im Bereich des Werkzeugangriffes wesentlich verringert, so daß ohne weiteres auch aus Kunststoff gefertigte Schraubenköpfe entsprechend ausgestaltet und so betätigt werden können. Daher wäre es grundsätzlich ebenfalls denkbar, Schrauben mit kunststoffbeschichteten Köpfen bzw. mit fast durchgehend aus Kunststoff bestehenden Köpfen auch selbstbohrend auszuführen.

An sich ist das Material der Schrauben, bei welchen die erfindungsgemäßen Maßnahmen eingesetzt werden, ohne Belang. So ist es möglich, auf die erfindungsgemäße Art und Weise Schrauben aus Kohlenstoffstahl, aus rostfreiem Stahl, aus Aluminium oder anderen Metallen herzustellen oder aber auch Schrauben, welche zur Gänze aus Kunststoffen bzw. glasfaserverstärkten Kunststoffen gefertigt sind.

## Patentansprüche

1. Schraube mit einem zumindest auf einem Teil seiner Länge mit einem Gewinde versehenen Schaft und einem Kopf, welcher einen Werkzeugangriff aufweist, wobei am Kopf (2) der Schraube (1) wenigstens ein mit axialem Abstand (B) von einer Auflagefläche (12) des Kopfes angeordneter Bund (6) ausgebildet ist und dieser Bund (6) zumindest abschnittweise einen schaftseitig an den Bund (6) anschließenden Abschnitt (7) radial übergreift, **dadurch gekennzeichnet, daß** der Werkzeugangriff (8) als ein an dem schaftseitig an den Bund (6) anschließenden Abschnitt (7) des Kopfes (2) vorgesehener Außenangriff ausgebildet ist und das Gewinde (4) selbstformend ausgebildet ist.

2. Schraube nach Anspruch 1, **dadurch gekennzeichnet, daß** an den an den Bund (6) anschließenden, schaftseitigen Abschnitt (7) ein die Auflagefläche (12) des Kopfes (2) bildender scheibenförmiger Teil (13) anschließt.

3. Schraube nach Anspruch 1 oder 2, **dadurch gekennzeichnet, daß** ein zusätzlicher Werkzeugangriff (8) an der dem Schaft (3) abgewandten Seite des Bundes (6) ausgebildet ist.

4. Schraube nach Anspruch 3, **dadurch gekennzeichnet, daß** an der dem Schaft (3) abgewandten Seite des Bundes (6) ein axial vorstehender Abschnitt mit einem Außenwerkzeugangriff ausgebildet ist.

5. Schraube nach einem der Ansprüche 1 bis 4, **dadurch gekennzeichnet, daß** zur Bildung eines axialen Abstandes (B) des Bundes (6) zur Auflagefläche (12) des Kopfes (2) eine im Durchmesser gegenüber dem Bund (6) kleinere Unterlegscheibe vorgesehen ist, welche verlierbar oder unverlierbar schaftseitig unter dem Bund (6) einsetzbar ist.

6. Schraube nach den Ansprüchen 2 und 5, **dadurch gekennzeichnet, daß** der scheibenförmige Teil (13) einstückig mit dem Kopf (2) der Schraube (1) ausgeführt oder als die Unterlegscheibe ausgebildet ist.

7. Schraube nach einem der vorstehenden Ansprüche, **dadurch gekennzeichnet, daß** der Bund (6) in Achsrichtung der Schraube (1) gesehen den schaftseitigen Abschnitt (7) mit dem Werkzeugangriff (8) zur Gänze abdeckt, so daß der Werkzeugangriff (8) zur Gänze unterhalb und innerhalb der Außenbegrenzung des Kopfes (2) liegt.

8. Schraube nach einem der Ansprüche 2 bis 7, **dadurch gekennzeichnet, daß** der Bund (6) und einer oder mehrere zusätzliche, scheibenförmige Teile (13) gleiche oder unterschiedliche Größe und/oder Außenkontur aufweisen.

9. Schraube nach einem der vorstehenden Ansprüche, **dadurch gekennzeichnet, daß** am Bund (6) selbst ein Außenwerkzeugangriff ausgebildet ist.

10. Schraube nach einem der vorstehenden Ansprüche, **dadurch gekennzeichnet, daß** der Werkzeugangriff (8) im Querschnitt mehreckig oder unrund ausgeführt ist.

11. Schraube nach einem der vorstehenden Ansprüche, **dadurch gekennzeichnet, daß** ein Werkzeugangriff (8) in Form von Vertiefungen und/oder Erhöhungen und/oder symmetrisch bzw. unsymmetrisch verlaufender Umfangskontur vorgesehen ist.

12. Schraube nach einem der vorstehenden Ansprüche, **dadurch gekennzeichnet, daß** der Bund (6) zylinder-, kegelstumpf- oder kugelabschnittförmig ausgebildet ist.

13. Schraube nach einem der vorstehenden Ansprüche, **dadurch gekennzeichnet, daß** insbesondere am frei liegenden Endbereich des Kopfes (2) vorgesehene Übergänge oder Kanten abgerundet ausgeführt sind.

14. Schraube nach einem der vorstehenden Ansprüche, **dadurch gekennzeichnet, daß** der den Werkzeugangriff (8) aufweisende Abschnitt (7, 14) bezüglich seiner axialen Länge (B) gleich groß oder kleiner ist als der einen Teil des Kopfes (2) bildende Bund (6).

15. Schraube nach einem der Ansprüche 1 bis 13, **dadurch gekennzeichnet, daß** der den Werkzeugangriff (8) aufweisende Abschnitt (7, 14) bezüglich seiner axialen Länge (B) größer ist als der einen Teil des Kopfes (2) bildende Bund (6).

16. Schraube nach einem der vorstehenden Ansprüche, **dadurch gekennzeichnet, daß** an dem dem Kopf (2) abgewandten Ende des Schaftes (3) ein Bohrteil (5) ausgebildet, angesetzt oder eingesetzt ist.

## Claims

1. A screw with a shank provided at least along part of its length with a thread and with a head which has a tool engagement portion, wherein at least one flange (6) is disposed on the head (2) of the screw (1) at an axial distance (B) from a contact surface (12) of the head and this flange (6) radially overlaps at least in sections a portion (7) adjoining the flange (6) on the shank side, **characterised in that** the tool engagement portion (8) is in the form of an external engagement portion provided on the portion (7) of the head (2) adjoining the flange (6) on the shank side, and the screw-thread is designed to be self-forming.

2. A screw according to Claim 1, **characterised in that** the portion (7) on the shank-side adjoining the flange (6) is adjoined by a disc-shaped part (13) forming the contact surface (12) of the head (2).

3. A screw according to Claim 1 or 2, **characterised in that** an additional tool engagement portion (8) is formed on the side of the flange (6) remote from the shank (3).

4. A screw according to Claim 3, **characterised in that** an axially projecting portion with an external tool engagement portion is formed on the side of the flange (6) remote from the shank (3).

5. A screw according to any one of Claims 1 to 4, **characterised in that** to provide an axial distance (B) of the flange (6) from the contact surface (12) of the head (2) a washer is provided which is of smaller diameter than the flange (6) and which can be inserted captively or non-captively under the flange (6) on the shank side.

6. A screw according to Claims 2 and 5, **characterised in that** the disc-shaped part (13) is formed in one piece with the head (2) of the screw (1) and is in the form of the washer.

7. A screw according to any one of the preceding Claims, **characterised in that**, viewed in the axial direction of the screw (1), the flange (6) entirely covers the portion (7) on the shank side with the tool engagement portion (8) so that the tool engagement portion (8) is situated entirely below and within the outer boundary of the head (2).

8. A screw according to any one of Claims 2 to 7, **characterised in that** the flange (6) and one or more additional disc-shaped parts (13) are of the same or different size and/or outer contour.

9. A screw according to any one of the preceding Claims, **characterised in that** an external tool engagement portion is formed on the flange (6) itself.

10. A screw according to any one of the preceding Claims, **characterised in that** the tool engagement portion (8) is of polygonal or non-circular cross-section.

11. A screw according to any one of the preceding Claims, **characterised in that** a tool engagement portion (8) is provided in the form of recesses and/or projections and/or of symmetrically or asymmetrically extending circumferential contour.

12. A screw according to any one of the preceding Claims, **characterised in that** the flange (6) is of cylindrical, frustoconical or spherical segment shape.

13. A screw according to any one of the preceding Claims, **characterised in that** transitions or edges, which are provided in particular at the exposed end zone of the head (2), are of rounded shape.

14. A screw according to any one of the preceding Claims, **characterised in that** in relation to its axial length (B) the portion (7,14) having the tool engagement portion (8) is of the same size as or is smaller than the flange (6) forming one part of the head (2).

15. A screw according to any one of Claims 1 to 13, **characterised in that** in relation to its axial length (B) the portion (7,14) having the tool engagement portion (8) is larger than the flange (6) forming one part of the head (2).

16. A screw according to any one of the preceding Claims, **characterised in that** a drilling member (5) is formed on, attached to or inserted at the end of the shank (3) remote from the head (2).

## Revendications

1. Vis présentant un filetage sur au moins une partie de sa longueur et une tête avec une prise d'outil, cette tête (2) de la vis (1) comprenant à une distance axiale (B) de sa portée d'appui (12) au moins un collet (6) qui recouvre radialement, au moins localement, un segment (7) qui lui est raccordé du côté de la tige,
**caractérisée en ce que**
la prise d'outil (8) est une prise externe prévue sur le segment (7) de la tête (2) raccordé au collet (6) du côté de la tige, et le filetage (4) est un filetage auto-taraudant.

2. Vis selon la revendication 1,
**caractérisée en ce qu'**
à la section (7) est raccordée une partie (13) en forme de disque qui forme la portée d'appui (12) de la tête (2).

3. Vis selon la revendication 1 ou 2,
**caractérisée en ce qu'**
une prise d'outil (8) supplémentaire est constituée sur le côté du collet (6) éloigné de la tige (3).

4. Vis selon la revendication 3,
**caractérisée en ce que**
sur le côté du collet (6) éloigné de la tige (3) est formée une section faisant saillie axialement avec une prise externe d'outil.

5. Vis selon l'une des revendications 1 à 4,
**caractérisée en ce que**
pour créer l'espacement axial (B) du collet (6) par rapport à la portée d'appui (12) de la tête (2), il est prévu une rondelle de diamètre inférieur à celui du collet (6) et qui peut être montée, de manière imperdable ou non, sous le collet (6) du côté de la tige.

6. Vis selon les revendications 2 et 5,
**caractérisée en ce que**
la partie (13) en forme de disque est monobloc avec la tête (2) de la vis (1) ou est constituée par une rondelle.

7. Vis selon l'une des revendications précédentes,
**caractérisée en ce que**
le collet (6), observé selon la direction axiale de la vis, recouvre entièrement la section (7) portant la prise d'outil (8), de sorte que la prise (8) se trouve entièrement en dessous de la tête (2) et à l'intérieur du contour de cette tête.

8. Vis selon l'une des revendications 2 à 7,
**caractérisée en ce que**
le collet (6) et une ou plusieurs parties supplémentaires (13) en forme de disque présentent des grandeurs et/ou des contours externes égaux ou différents.

9. Vis selon l'une des revendications précédentes,
**caractérisée en ce qu'**
une prise externe d'outil est réalisée sur le collet (6) lui-même.

10. Vis selon l'une des revendications précédentes,
**caractérisée en ce que**
la prise d'outil (8) présente une section polygonale ou non ronde.

11. Vis selon l'une des revendications précédentes,
**caractérisée en ce que**
la prise d'outil (8) présente des creux et/ou des saillies et/ou un contour symétrique ou asymétrique.

12. Vis selon l'une des revendications précédentes,
**caractérisée en ce que**
le collet (6) a une forme cylindrique, conique ou tronconique.

13. Vis selon l'une des revendications précédentes,
**caractérisée en ce que**
les zones de transition ou les bords prévus sur la zone d'extrémité libre de la tête (2) sont arrondis.

14. Vis selon l'une des revendications précédentes,
**caractérisée en ce que**
la section (7, 14) présentant la prise d'outil (8) a une longueur axiale (B) égale ou inférieure à celle du collet (6) constituant une partie de la tête (2).

15. Vis selon l'une des revendications 1 à 13,
**caractérisée en ce que**
la section (7, 14) présentant la prise d'outil (8) a une longueur axiale (B) supérieure à celle du collet (6) constituant une partie de la tête (2).

16. Vis selon l'une des revendications précédentes,
**caractérisée en ce qu'**
à l'extrémité de la tige (3) éloignée de la tête (2) est formée, raboutée ou insérée, une partie de forage (5).
